# FASCICULE DE BREVET EUROPEEN

(11) **EP 3 538 732 B1**
(45) Date de publication et mention de la délivrance du brevet: **02.09.2020**
(21) Numéro de dépôt: 17801081.5
(22) Date de dépôt: 03.11.2017
(51) Int. Cl.: E06B 9/68

(54) **DISPOSITIF DE MANOEUVRE D'UN SYSTÈME D'OCCULTATION D'UNE BAIE ET INSTALLATION D'OCCULTATION METTANT EN OEUVRE UN TEL DISPOSITIF**
VORRICHTUNG ZUM BETRIEB EINES SYSTEMS ZUM ABDECKEN EINER ÖFFNUNG UND ABDECKEINHEIT MIT SOLCH EINER VORRICHTUNG
DEVICE FOR OPERATING A SYSTEM FOR COVERING AN OPENING AND COVERING UNIT USING SUCH A DEVICE

(30) Priorité: 10.11.2016 FR 1660930
(43) Date de publication de la demande: 18.09.2019
(60) Demande divisionnaire: 20187735.4
(73) Titulaire: Flexoma, 69603 Villeurbanne Cedex (FR)
(72) Inventeur: PATIN, Aymeric, 69970 Marennes (FR)
(74) Mandataire: Jacobacci Coralis Harle
(86) Numéro de dépôt international: PCT/FR2017/053012
(87) Numéro de publication internationale: WO 2018/087454

(56) Documents cités:
- EP-A2- 2 098 676
- DE-A1- 19 834 777
- DE-U1- 20 309 690

## Description

La présente invention concerne le domaine technique des dispositifs de manœuvre d'un système d'occultation d'une baie notamment d'une baie de véhicule ou encore d'un système d'occultation d'une baie de bâtiment.

Dans le domaine ci-dessus, il est connu, notamment pour la manœuvre motorisée de rideau d'occultation de fenêtre de bâtiment, des dispositifs de manœuvre mettant en œuvre une courroie qui circule entre un pignon d'entraînement et une poulie de renvoi et qui est liée à un chariot solidaire du rideau. Le pignon d'entraînement est alors mû par un motoréducteur électrique associé à des moyens de commande permettant de commander la rotation du motoréducteur dans un sens pour l'ouverture du rideau et dans le sens inverse pour la fermeture de ce dernier. De tels dispositifs de manœuvre permettent effectivement un déplacement motorisé du rideau en ouverture et en fermeture mais présentent l'inconvénient de mettre en œuvre une poulie de renvoi qui peut rendre difficile l'implantation du dispositif de manœuvre et en n'augmente l'encombrement. De plus, utilisation d'une courroie induit un encombrement total relativement important dans la mesure où il convient de prévoir les espaces nécessaires pour le brin aller et le brin retour de la courroie ainsi que pour la poulie de renvoi.

Afin de remédier à ces inconvénients, les demandes DE20309690, EP2098676 et EP1967400 ont proposé des dispositifs de manœuvre d'un système d'occultation d'une baie qui comprend au moins une extrémité mobile en translation entre une position de rétraction et une position d'extension dans laquelle le système occulte en partie au moins la baie. Selon ces documents, les dispositifs de manœuvre comprennent en outre :
- une bande poussante flexible qui comprend une première et une deuxième extrémité et qui est destinée à être liée à proximité ou au niveau de sa première extrémité à l'extrémité mobile du système d'occultation
- des moyens motorisés d'entrainement de la bande poussante adaptés pour assurer le déplacement en translation de la première extrémité entre une position proximale correspondant à la position de rétraction du système d'occultation et une position distale correspondant à la position d'extension du système d'occultation,
   la bande poussante étant adaptée pour transmettre un effort de poussée à l'extrémité mobile du système d'occultation. Toujours selon ces documents, lors de l'ouverture du système d'occultation la bande poussante est stockée dans un logement adhoc en étant enroulée sur elle-même.

Or, un tel stockage de la bande poussante est relativement encombrant compte tenu du volume que représente la bande poussante enroulée sur elle-même ce qui représente une certaine difficulté pour l'intégration du dispositif de manœuvre dans des environnements exigus tels que, notamment, les habitacles de véhicules.

Afin de remédier à cet inconvénient l'invention concerne un dispositif de manœuvre d'un système d'occultation d'une baie qui comprend au moins une extrémité mobile en translation entre une position de rétraction et une position d'extension dans laquelle le système occulte en partie au moins la baie, le dispositif de manœuvre comprenant :
- une bande poussante flexible qui comprend une première et une deuxième extrémité, qui est destinée à être liée à l'extrémité mobile du système d'occultation et qui est adaptée pour transmettre un effort de poussée à l'extrémité mobile du système d'occultation,
- des moyens d'entrainement motorisés de la bande poussante adaptés pour assurer le déplacement en translation de la bande poussante entre une position proximale correspondant à la position de rétraction du système d'occultation et une position distale correspondant à la position extension du système d'occultation.

Selon l'invention le dispositif de manœuvre est caractérisé en ce qu'il comprend deux voies ou glissières parallèles, superposées ou en regard l'une de l'autre, dans lesquelles circulent les première et deuxième extrémités de la bande poussante et en ce que les moyens d'entrainement comprennent une roue d'entrainement et de renvoi autour de laquelle la bande poussante s'enroule partiellement de manière qu'une portion de la bande poussante est située dans la première glissière et une autre portion est située dans la deuxième glissière.

La mise en œuvre de deux glissières parallèles, superposées ou en regard l'une de l'autre, permet de stoker de manière compacte est dans un volume de faible épaisseur la bande poussante quelle que soit la position du dispositif dans la mesure où un brin de la bande poussante est toujours située dans une glissière tandis que l'autre brin de la bande poussante est situé dans l'autre glissière. Ainsi, selon les mouvements du dispositif de manœuvre la bande poussante effectue un mouvement de va-et-vient entre les deux glissières en s'enroulant partiellement autour de la roue d'entrainement et de renvoi. En plus d'assurer le renvoi de la bande poussante d'une glissière à l'autre, cet enroulement partiel permet la transmission à la bande poussante d'efforts plus importants que ceux autorisés par les dispositifs selon l'art antérieur. De plus, en évitant l'enroulement l'invention permet d'utiliser les deux brins ou extrémité de la bande poussante. Ainsi un brin ou une extrémité de la bande poussante peut assurer la manœuvre du système d'occultation tandis que l'autre brin est utilisé en association avec un capteur pour définir une fin de course ou pour déterminer la position du système d'occultation. L'autre brin peut aussi être utilisé pour manœuvrer un deuxième système d'occultation.

Dans cet objectif de transmission optimale d'effort et selon une caractéristique de l'invention, la bande poussante entoure la roue d'entrainement et de renvoi sur un secteur angulaire compris entre 170° et 340° et de préférence compris entre 180° et 340°.

Selon une autre caractéristique de l'invention, la bande poussante n'est pas liée de manière rigide au système d'occultation sauf éventuellement au niveau de sa liaison avec l'extrémité mobile du système d'occultation. Il convient d'entendre par le fait que la bande poussante n'est pas liée de manière rigide au système d'occultation, que la bande poussante ne fait pas partie intégrante du système d'occultation. Ainsi, dans le cas où le système d'occultation comprend un rideau, selon cette caractéristique la bande poussante n'est pas intégrée audit rideau.

Selon une caractéristique de l'invention, la bande poussante est perforée et les moyens d'entrainement comprennent une roue d'entrainement dentée dont les dents engainent ou coopèrent avec les perforations de la bande poussante de manière à exercer un effort de poussée sur cette dernière. Un tel mode de réalisation permet d'assurer simplement la transmission des efforts importants sur la bande poussante et donc sur l'extrémité mobile du système d'occultation.

Selon une autre caractéristique de l'invention, le dispositif de manœuvre comprend un profilé qui porte et délimite en partie au moins les voies de guidage parallèles en regard l'une de l'autre. La mise en œuvre d'un tel profilé permet de parfaitement maîtriser l'encombrement du dispositif tout en facilitant la mise en place de ce dernier.

Selon une première forme de mise en œuvre de de cette caractéristique, le profilé possède une forme générale en U avec deux branches parallèles reliées par une âme, chaque branche délimitant une voie de guidage pour une extrémité de la bande poussante.

Selon une caractéristique de l'invention, le dispositif comprend au moins un chariot de liaison entre la bande poussante et le système d'occultation.

Selon une variante de cette caractéristique et de la première forme de réalisation le chariot est situé en partie au moins entre les deux branches parallèles du profilé et se déplace entre ces dernières.

Selon une autre variante de cette caractéristique, le chariot est adapté pour être lié de manière réversible ou démontable au système d'occultation. Ce caractère démontable permet de désolidariser le système d'occultation du dispositif de manœuvre de manière à permettre par exemple une manœuvre manuelle du système d'occultation.

Selon une autre variante de cette forme de mise en œuvre, les fond des deux voies de guidage en regard l'une de l'autre sont situés à une distance inférieure ou égale au diamètre de la roue de guidage et de renvoi.

Selon une caractéristique de l'invention, le dispositif comprend un boitier qui entoure la roue d'entrainement et de renvoi et qui délimite une chambre d'entrainement à l'intérieur de laquelle est située la roue d'entrainement et dont la paroi périphérique guide la bande poussante. La mise en œuvre d'un tel boitier permet de faciliter la mise ne place du dispositif d'entraînement tout en garantissant une grande sécurité de fonctionnement. De plus, le guidage effectué par la paroi périphérique de la chambre d'entrainement permet d'assurer une parfaite transmission des efforts à la bande poussante en empêchant cette dernière de se dégager de la roue d'entrainement et de renvoi ou de trop s'éloigner de cette dernière. Le guidage permet également de réduire le diamètre de la roue d'entrainement tout en permettant la transmission d'efforts importants dans la mesure où la paroi périphérique empêche la bande poussante de « sauter » ou de s'échapper de la roue d'entraînement.

Selon une variante de cette caractéristique, le boitier délimite en sortie de la chambre d'entrainement deux portions des voies de guidage qui sont courbes et raccordées aux portions de voie de guidage délimitées par un profilé rectiligne qui délimite deux voies ou glissières parallèle de guidage des deux brins opposés de la bande poussante.

Selon une caractéristique de l'invention, le dispositif de manœuvre comprend un guide avec une paroi longitudinale médiane dont une première face délimite en partie au moins une première glissière dans laquelle se déplace la première extrémité de la bande poussante et dont une deuxième face opposée à la première délimite en partie au moins une deuxième glissière dans laquelle circule la deuxième extrémité de la bande poussante et les moyens d'entraînement comprennent une roue de renvoi autour de laquelle la bande poussante s'enroule partiellement de manière qu'une portion de la bande poussante est située dans la première glissière et une autre portion est située dans la deuxième glissière. Cette caractéristique permet de réaliser un dispositif de manœuvre particulièrement compact dans la mesure où il n'est pas nécessaire de stocker la bande poussante enroulée sur elle-même.

Selon une autre caractéristique de l'invention, la bande poussante présente une épaisseur inférieure ou égale à 3,0 mm, de préférence inférieure ou égale à 0,5 mm et de manière plus particulièrement préférée inférieure ou égale à 0,2 mm. La mise en œuvre d'une bande poussante présentant de telles dimensions permet d'obtenir un dispositif de manœuvre présentant un encombrement réduit au niveau des zones de déplacement rectiligne de la bande poussante.

Selon encore une autre caractéristique de l'invention, la bande poussante est réalisée au moins en partie en métal à ressort. L'utilisation d'un tel matériau permet d'obtenir une bande poussante de faible épaisseur présentant, d'une part, une rigidité suffisante pour la transmission des efforts et, d'autre part, une flexibilité permettant un repliement sur elle-même de la bande poussante ou encore un enroulement sur elle-même de ladite bande poussante.

Selon une variante de cette caractéristique, la bande poussante est réalisée en partie au moins :
- en acier au carbone à ressort de préférence de nuance C67S+QT ou C75S+QT ou C85S+QT ou C100S+Q.T ou de référence 1.1204 ou 1.1231 ou 1.1248 ou 1.1269 ou 1.1274
- ou en acier inoxydable à ressort de préférence de nuance X10CrNr18-8 ou de référence 1.4310.

Selon l'invention, la bande poussante peut aussi être réalisée en matériau composite ou sous la forme d'un complexe de différents matériaux ou encore sous la forme d'un complexe de plusieurs feuilles ou feuillards d'un même matériau.

Selon une forme préférée de mise en œuvre de l'invention la bande poussante est réalisée en matière plastique telle que du polypropylène (PP).

L'invention concerne également une installation d'occultation d'une baie comprenant :
- un système d'occultation d'une baie qui comprend au moins une première extrémité mobile en translation entre une position de rétraction et une position d'extension dans laquelle le système occulte en partie au moins la baie,
- et un premier dispositif de manœuvre selon l'invention dont la bande poussante est liée à la première extrémité mobile du système d'occultation.

Selon une caractéristique de l'invention, l'installation comprend :
- au moins une première barre de charge qui est solidaire de la première extrémité mobile du système d'occultation, qui est liée à la bande poussante du premier dispositif de manœuvre et qui s'étend entre deux rails de guidage,
- et un système de câbles croisés adaptés pour garantir la perpendicularité de la première barre de charge (3) par rapport aux rails de guidage.

Par système de câble croisé, il convient d'entendre un système de deux câbles dont les extrémités de chaque câble sont fixes et liées de manière rigide en deux points opposés en diagonale de la baie. Chaque câble passe en outre à l'intérieur de la barre de charge qui peut glisser sur les câbles. Ces derniers présentent une longueur sensiblement égale à somme de la longueur de la barre de charge et de la distance séparant les points fixes dudit câble mesurée parallèlement à la direction de déplacement de la barre de charge.

Selon une caractéristique de l'installation selon l'invention, le système d'occultation comprend une deuxième extrémité mobile en translation entre une première position et une deuxième position et l'installation comprend un deuxième dispositif de manœuvre selon l'invention dont la bande poussante est liée à la deuxième extrémité mobile du système d'occultation. La mise en œuvre d'un système d'occultation avec deux extrémités mobiles chacune associée à un dispositif de manœuvre selon l'invention permet d'obtenir différentes configurations d'obturation partielle de la baie en fonction des besoins des utilisateurs.

Selon une variante de cette caractéristique, l'installation comprend :
- au moins une deuxième barre de charge qui est solidaire de la deuxième extrémité mobile du système d'occultation, qui est liée à la bande poussante du deuxième dispositif de manœuvre et qui s'étend entre deux rails de guidage,
- et un système de câbles croisés adaptés pour garantir la perpendicularité de la deuxième barre de charge par rapport aux rails de guidage.

Selon une autre caractéristique de l'invention, l'installation comprend un deuxième système d'occultation qui comprend une extrémité mobile en translation entre une position de rétraction et une position d'extension dans laquelle le deuxième système occulte en partie au moins la baie, l'extrémité mobile du deuxième système d'occultation étant liée à la bande poussante du premier dispositif de manœuvre de manière que une rotation dans un sens de la roue d'entrainement et de renvoi assure un rapprochement des extrémités mobiles des deux systèmes d'occultation et qu'une rotation en sens inverse assure un éloignement des extrémités mobiles. La mise en œuvre de deux systèmes d'occultation qui sont adaptés pour s'étendre à partir de deux extrémités opposées ce qui permet de diviser par deux les temps de fermeture et d'ouverture, ainsi que de motoriser les deux demi rideaux avec un seul dispositif de motorisation.

Selon une variante de cette caractéristique l'installation comprend
- pour chaque système d'occultation, une barre de charge qui est solidaire de l'extrémité mobile correspondante, qui est liée à la bande poussante du dispositif de manœuvre et qui s'étend entre deux rails de guidage,
- et un système de câbles croisés adaptés pour garantir la perpendicularité des barres de charge (3) par rapport aux rails de guidage.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif de manœuvre d'un système d'occultation conforme à l'invention.
- La figure 1 est une vue d'ensemble d'une installation d'occultation d'une baie mettant en œuvre un dispositif de manœuvre selon l'invention,
- la figure 2 est une perspective partielle montrant un détail constructif de l'ensemble illustré à la figure 1,

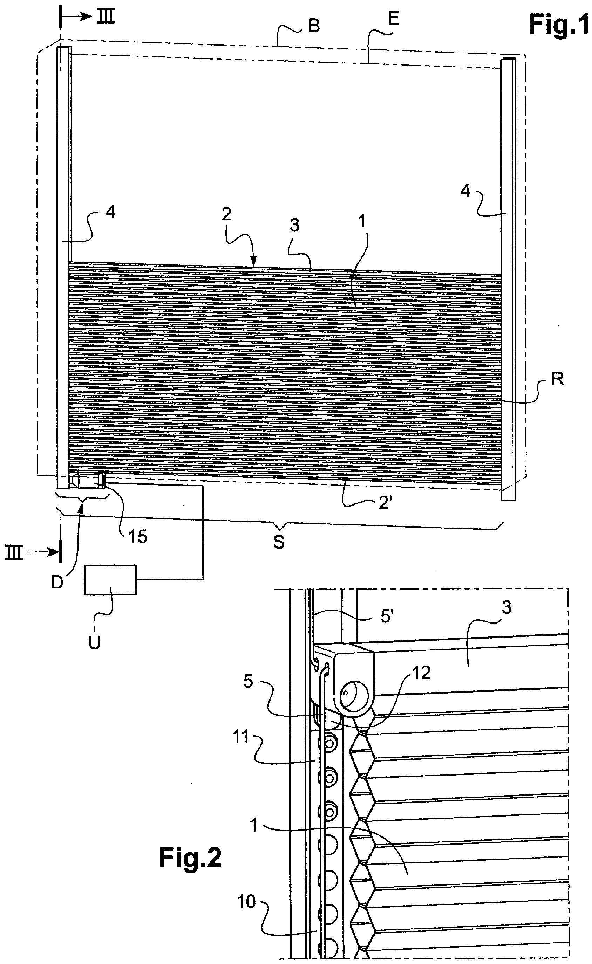

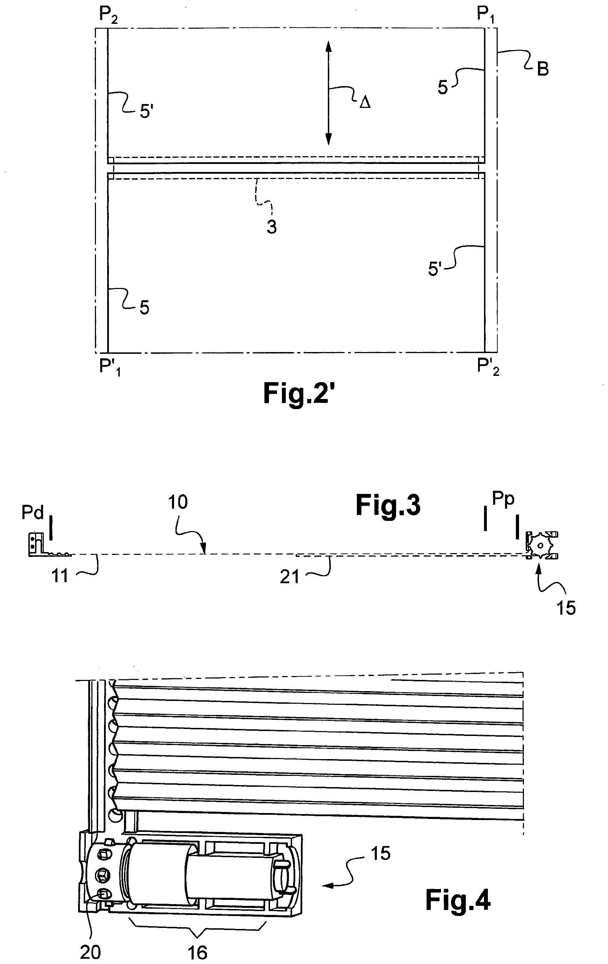

- La figure 2' est un schéma de principe d'un système de câbles croisés assurant le guidage de la barre de charge et sa perpendicularité à la bande poussante,
- la figure 3 est une section schématique selon la ligne III-III de la figure 1,

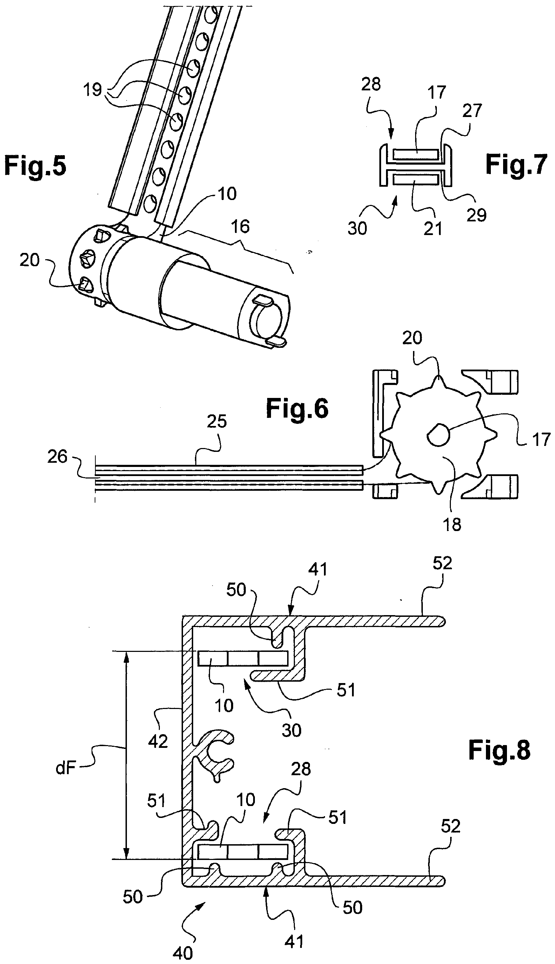

- les figures 4 et 5 sont des perspectives partielles schématiques montrant notamment les moyens d'entraînement du dispositif de manœuvre illustré à la figure 1,
- les figures 6 et 7 sont des coupes schématiques montrant des détails constructifs du dispositif de manœuvre représenté à la figure 1,
- la figure 8 est une section droite transversale d'un profilé définissant deux voies de guidage pour les deux brins de la bande passante situés de part et d'autre de la roue d'entrainement et de renvoi,

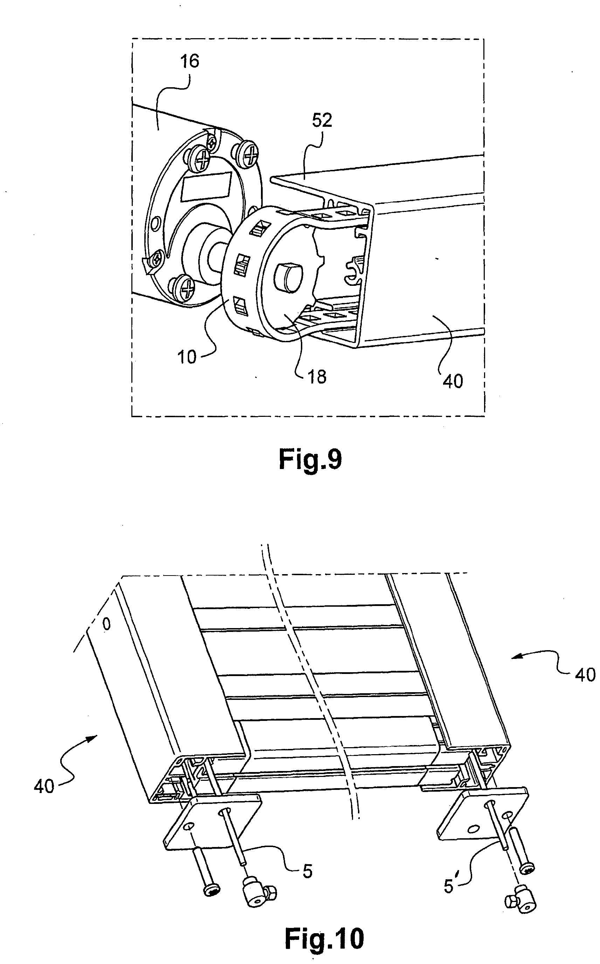

- la figure 9 est une perspective schématique arrachée montrant un exemple de mise en œuvre du profilé selon la figure 9 au niveau du renvoi de la bande poussante autour de la roue d'entrainement,
- la figure 10 est une perspective éclatée de détails constructifs d'une installation d'occultation conforme à l'invention mettant en œuvre le profilé illustré à la figure 8,

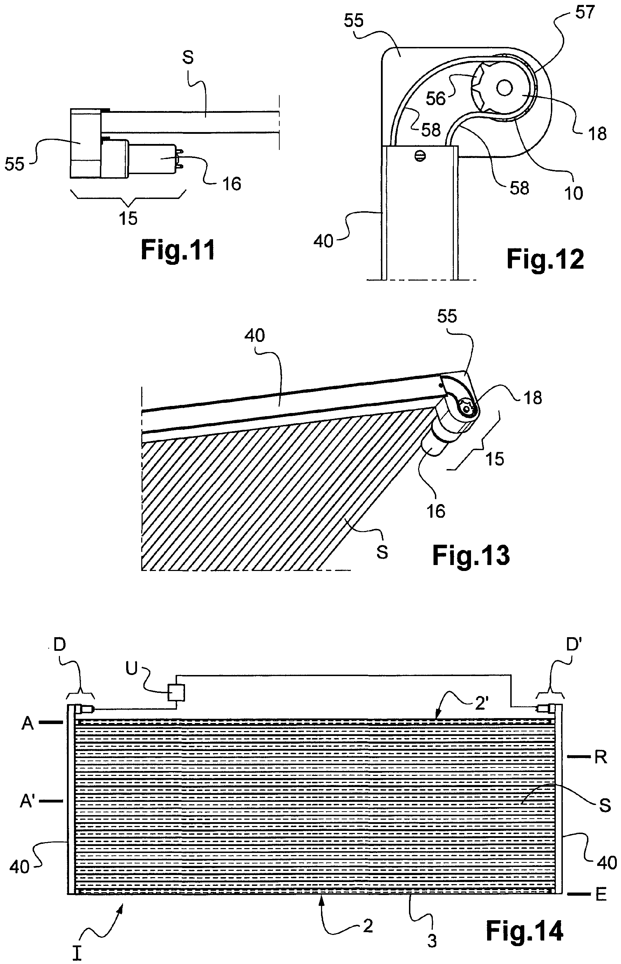

- la figure 11 est vue de dessus partielle d'une forme de réalisation des moyens de motorisation du dispositif de manœuvre selon l'invention,
- La figure 12 est une vue de gauche partielle des moyens de motorisation illustrés à la figure 11,
- La figure 13 est une perspective schématique des moyens de motorisation illustrés figures 11 et 12,

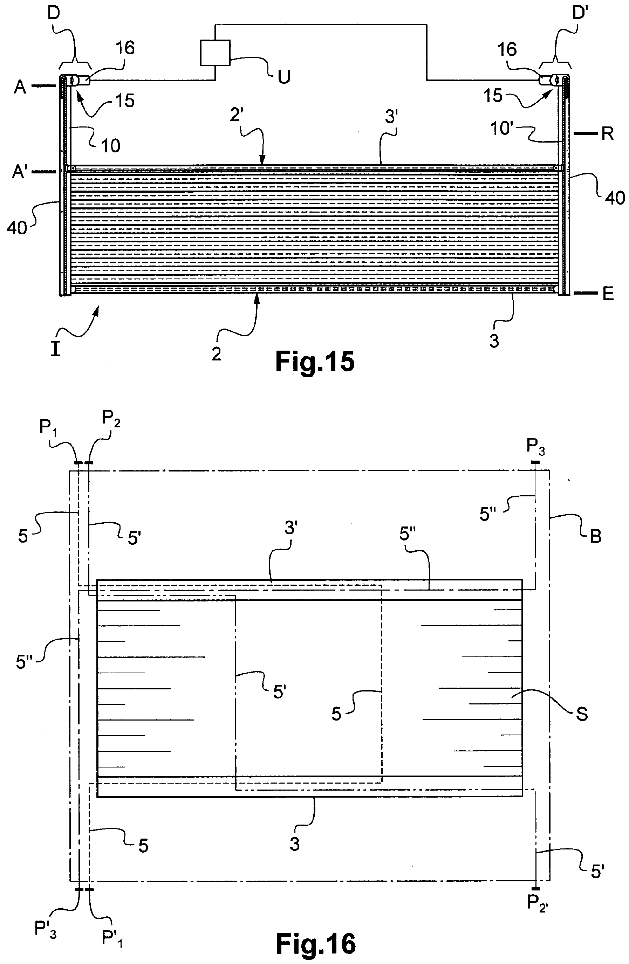

- les figures 14 et 15 sont des vues schématiques d'une forme de réalisation d'une installation d'occultation selon l'invention dont le système d'occultation comprend deux extrémités mobiles,
- la figure 16 est une vue schématique d'un système de câbles croisés mis en œuvre dans l'installation illustrée figures 14 et 15,

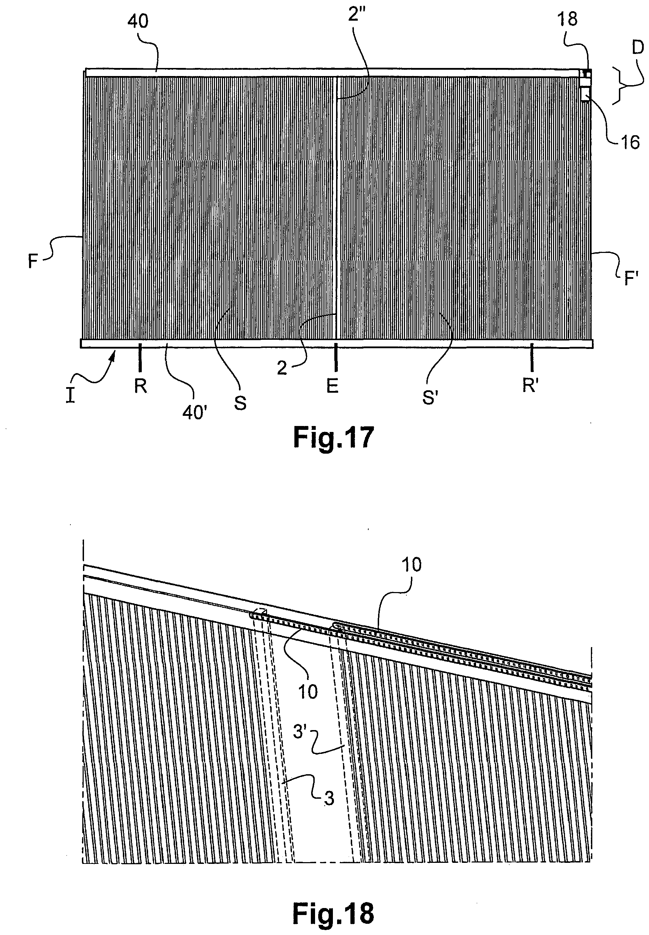

- la figure 17 est une élévation de face schématique d'une installation d'occultation comprenant deux systèmes d'occultation à déplacement horizontal,
- la figure 18 est une perspective partiellement arrachée montrant la liaison des deux systèmes d'occultation avec la bande poussante du dispositif de manœuvre associé,

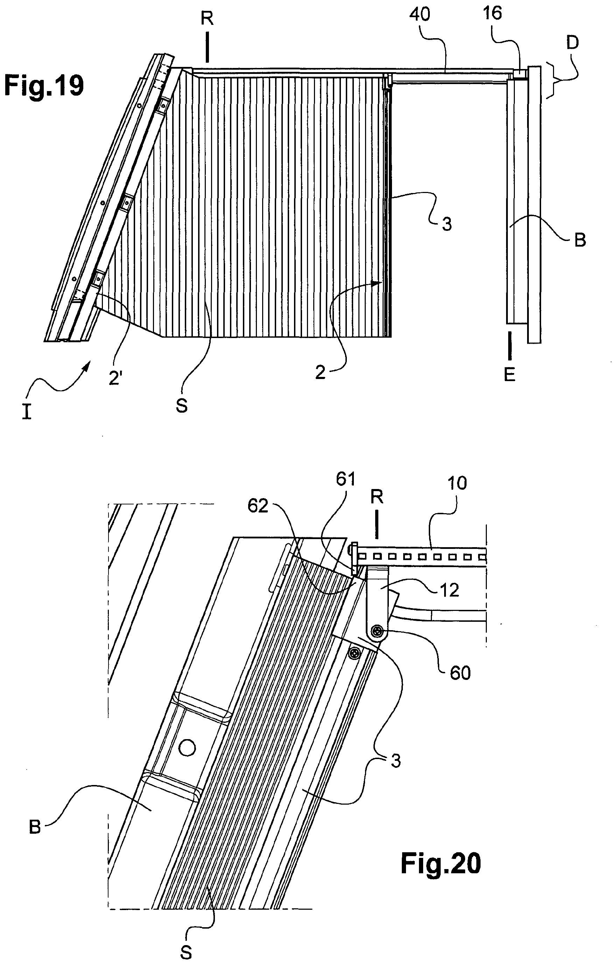

- la figure 19 est une vue schématique d'une installation d'occultation d'une baie de forme trapézoïdale,
- la figure 20 est une vue à plus grande échelle d'un détail constructif de l'installation illustrée à la figure 19.
Il est à noter que sur ces figures les éléments structurels et/ou fonctionnels communs aux différentes variantes ou formes de réalisation peuvent présenter les mêmes références.

L'invention vise à proposer des moyens permettant la manœuvre motorisée d'un système d'occultation S d'une baie B, par exemple d'un bâtiment ou d'un véhicule, vitrée ou non symbolisée en traits mixtes à la figure 1. Selon l'exemple illustré, le système d'occultation S comprend un rideau 1 ayant au moins une extrémité 2 mobile entre une position de rétraction R et une position d'extension E dans laquelle le système S occulte en partie au moins la baie B. Le rideau 1 comprend à l'opposé de l'extrémité mobile 2 une extrémité fixe 2'. Dans le cas présent, l'extrémité mobile 2 est solidaire d'une barre de charge 3 qui s'étend sur toute la largeur du rideau 1 entre deux rails de guidage 4 en « U » dans lesquels sont disposées les extrémités latérales du rideau 1.

Afin de garantir la perpendicularité de la barre de charge 3 par rapport aux rails de guidage 4, il est mis en œuvre, comme le montrent figures 2 et 2', un système de câbles croisés 5 et 5'.

La figure 2' illustre plus particulièrement le principe du système de câbles croisés. Comme cela ressort de cette figure, les extrémités de chaque câble 5, 5' sont fixes et liées de manière rigide en deux points, respectivement P1,P1' et P2,P2', opposés en diagonale de la baie B. Chaque câble 5, 5' passe en outre à l'intérieur de la barre de charge 3 qui peut glisser sur les câbles. Chaque câble 5,5' présente alors une longueur sensiblement égale à somme de la longueur de la barre de charge 3 et de la distance séparant les points fixes P1,P1' et P2,P2' dudit câble mesurée parallèlement à la direction de déplacement Δ de la barre de charge 3. En plus d'assurer le guidage de la barre de charge les câbles croisés permettent de déplacer la barre de charge en appliquant l'effort de manœuvre uniquement à l'une de ses extrémités.

Afin d'assurer un déplacement motorisé de l'extrémité mobile 2, l'invention propose un dispositif de manœuvre D qui comprend, comme le montrent les figures 2 et 3, une bande poussante 10 flexible dont une première extrémité 11 est liée à un chariot 12 solidaire de la barre de charge 3. Selon l'invention, la bande poussante 10 n'est pas liée de manière rigide à l'ensemble ou la totalité du système d'occultation et plus particulièrement la bande poussante n'est pas intégrée au rideau 1. Bien entendu, cela n'exclut pas une liaison rigide entre la première extrémité 11 de la bande poussante 10 et l'extrémité mobile du rideau 1 ou le chariot 12. Selon l'exemple illustré, la barre de charge 3 est liée de manière réversible au chariot 12 de manière à permettre un démontable de leur liaison de sorte que la barre de charge 3 et donc le système d'occultation S peuvent être manœuvrés manuellement même en cas de disfonctionnement du dispositif D de manœuvre motorisé selon l'invention. De plus, il est mis en œuvre, entre la bande poussante et la barre de charge, une liaison pivot d'axe perpendiculaire au plan de la bande poussante de manière à réduire la transmission d'efforts de torsion lors d'entrainement de la barre de charge.

La bande poussante 10 est adaptée pour transmettre, à l'extrémité mobile 2 et plus particulièrement au chariot 12, soit un effort de poussée de manière à assurer le déploiement du rideau 1 jusqu'à la position d'extension E, soit un effort de traction de manière à assurer le repliement du rideau 1 jusqu'à la position de rétraction R. La bande poussante 10 doit donc être suffisamment rigide pour permettre la transmission des efforts nécessaires au déplacement de l'extrémité mobile tout en étant suffisamment flexible pour permettre un repliement de la bande sur elle-même comme cela apparaîtra par la suite, et cela pour un grand nombre de cycles.

La bande poussante 10 doit, de plus, ne pas être trop épaisse de manière à s'intégrer facilement dans l'encombrement réservé au système d'occultation. À cet effet la bande poussante 10 présente une épaisseur inférieure ou égale à 3 mm, de manière préférée inférieure ou égale à 0,5 mm et de manière plus particulièrement préférée inférieure ou égale à 0,2 mm.

Afin de répondre à ces exigences de caractéristiques mécaniques et dimensionnelles, la bande poussante 10 est de préférence réalisée en Polypropylène (PP).

Le dispositif de manœuvre D comprend en outre des moyens d'entraînement 15 motorisés de la bande poussante 10 adaptés pour assurer le déplacement en translation de la première extrémité 11 entre une position proximale Pp correspondant à la position de rétraction R du rideau 1 et une position distale Pd correspondant à la position d'extension E du rideau 1. Les moyens de d'entraînement 15 sont pilotés par une unité de commande U qui peut être réalisée de toute manière appropriée et notamment comprendre une interface d'intégration à l'électronique d'un véhicule sur lequel le dispositif de manœuvre est destiné à être intégré. Le dispositif de manœuvre peut en outre comprendre un ou plusieurs capteurs reliés à l'unité de commande U pour permettre une détermination de la position de chaque extrémité mobile du système d'occultation.

Comme cela ressort des figures 4 à 6, les moyens d'entraînement 15 comprennent un motoréducteur électrique 16 dont un axe de sortie 17 est lié en rotation à une roue d'entraînement 18 adaptée pour déplacer la bande poussante 10. Selon l'exemple illustré, la bande poussante 10 est trouée de manière à présenter des perforations 19 réparties selon un pas régulier. La roue d'entraînement 18 présente alors des dents 20 destinées à coopérer avec les perforations 19 de la bande poussante 10 de manière à limiter le glissement de cette dernière par rapport à la roue d'entraînement 18.

La rigidité de la bande poussante 10 et la coopération des perforations avec les dents de la roue d'entraînement permettre la transmission des efforts importants et cela malgré la finesse ou la faible épaisseur de la bande poussante.

Selon l'invention, la roue d'entraînement 18 assure également une fonction de roue de renvoi dans la mesure où la deuxième extrémité 21 de la bande poussante 10 est ici renvoyée sous la première extrémité. Il est à noter que la bande poussante 10 entoure alors la roue d'entraînement et de renvoi 18 sur un secteur angulaire supérieur à 180° et plus particulièrement compris entre 180° et 340°.

Afin d'éviter toute interférence entre les deux brins de la bande poussante 10 situés en amont et en aval de la roue d'entraînement 18, il est mis en œuvre un guide 25, visible aux figures 6 et 7 avec une paroi longitudinale médiane 26. U première face 27 de la paroi médiane 26 délimite en partie au moins une première glissière 28 dans laquelle circule la première extrémité de la bande poussante tandis qu'une face 29 opposée à la première 27 délimite une deuxième glissière 30 dans laquelle circule la deuxième extrémité 21. De manière préférée et comme le montre la figure 7, le guide 25 présente une section droite transversale en forme de H.

Le motoréducteur 16 est, par ailleurs, raccordé à une unité de commande U qui permet à un utilisateur de piloter le fonctionnement dudit motoréducteur pour assurer sa rotation dans un sens ou dans un autre selon qu'il faille ouvrir ou fermer le système d'occultation. Il pourra être noté que l'ensemble comprenant le dispositif de manœuvre D et le système d'occultation S forme, au sens de l'invention, une installation I d'occultation de la baie E.

Dans le cadre de l'exemple décrit en relation avec les figures 1 à 7, le dispositif de manœuvre conforme à l'invention prévoit un renvoi de la bande poussante 10 de sorte que les deux brins de cette dernière situés de part et d'autre de la roue d'entraînement et de renvoi 18 circulent sur des voies parallèles et superposées. Selon cet exemple, le guide 25 définit les glissières ou voies de guidage parallèles et superposées voire juxtaposées.

Toutefois, un tel mode de réalisation du guide 25 n'est pas strictement nécessaire. Ainsi, selon une autre forme de réalisation de l'invention plus particulièrement illustrée figure 8 et 9, le guide 25 est formé par un profilé 40 qui porte et délimite en partie au moins les voies de guidage 28 et 30. Selon cet exemple, le profilé 40 possède une forme générale en U avec deux branches parallèles 41 reliées par une âme 42. Chaque branche 41 délimite ou forme une voie de guidage 28, 30 pour une extrémité ou un brin de la bande poussante 10. Dans le cas présent, la voie de guidage 28 possède une section en forme de C tandis que la voie de guidage 30, en regard possède une section en forme de G. il est à noter que les voies de guidage 28 et 30 possèdent chacune au moins une nervure longitudinale 50 située regard d'un retour 51 fermant partiellement la voie correspondante de manière à maintenir la bande poussante 10. Il doit être remarqué que selon cet exemple les branches 41 sont prolongées à l'opposé de l'âme 42 chacune par une aile 52. Les deux ailes 52 délimitent alors un espace dans lequel peuvent, par exemple et comme le montre la figure 10, être situés les câbles croisés 5 et 5' de guidage de la barre de charge ainsi que les extrémités latérales du système d'occultation et de la barre de charge. Le profilé possède ainsi plusieurs fonctions dont celles de guidage de la bande poussante, de la barre de charge et du système d'occultation.

Dans le cas de la mise en œuvre d'un tel profilé, la distance df séparant le fond, ici définit par les nervures 50, des voies de guidage 28, 30 en regard est, de préférence, inférieure ou égale au diamètre de la roue d'entrainement 18 mesurée aux extrémités de ses dents.

Selon une forme de réalisation plus particulièrement illustrée aux figures 11 à 13, le dispositif de manœuvre D et plus particulièrement les moyens d'entraînement 15 comprennent un boitier 55 qui entoure la roue d'entrainement et de renvoi 18. Le boitier 55 délimite une chambre d'entrainement 56 à l'intérieur de laquelle est située la roue d'entrainement 18. La paroi périphérique 57 de la chambre 56 guide alors la bande poussante 10. Selon l'exemple illustré, le boitier 55 délimite, en sortie de la chambre d'entrainement 56, deux portions des voies de guidage 58 qui sont courbes et qui se raccordent aux portions de voie de guidage rectilignes délimitées par le profilé 40 également rectiligne. La forme courbe des portions de voie de guidage 58 délimitées par le boitier 55 permettent de réduite la dimension du dispositif mesurée parallèlement à la direction de translation du système d'occultation. Bien entendu, selon une autre forme de réalisation le boitier 55 peut aussi comporter des portions de voies de guidage rectilignes.

Selon l'exemple de réalisation décrit en relation avec les figures 1 à 7, le dispositif de manœuvre ne comprend qu'une seule bande poussante située d'un côté du rideau 1. Toutefois il pourrait être mis en œuvre plus d'une bande poussante et notamment deux bandes poussantes situées de part et d'autre du rideau 1 et dans les rails 4. Les deux bandes poussantes peuvent alors, soient être entraînées par des moyens d'entraînement communs, soient être entraînées par des moyens d'entraînement distincts mais synchronisés.

Toujours selon l'exemple de réalisation décrit en relation avec les figures 1 à 7, le système d'occultation ne comprend qu'une extrémité mobile. Toutefois un tel mode de réalisation n'est pas strictement nécessaire. Ainsi, la figure 14 illustre une forme de réalisation d'une installation d'occultation I selon l'invention dont le système d'occultation S comprend deux extrémités mobiles en translation 2 et 2'. La première extrémité 2 est mobile en translation entre une position de rétraction R et une position d'extension E, tandis que la deuxième extrémité est mobile en translation entre une première position A et une deuxième position A'.

Lorsque la première extrémité 2 est en position d'extension R et la deuxième extrémité 2' en première position A, la baie est alors complètement occultée comme le montre la figure 14. Lorsque la première extrémité 2 est en position d'extension R et la deuxième extrémité 2' en deuxième position A', la baie est alors partiellement occultée en partie basse comme le montre la figure 15. Cette configuration peut être qualifiée de position d'intimité dans la mesure où la lumière passe par le haut de la baie mais il n'est pas possible de voir au travers de la partie basse de la baie. Lorsque la deuxième extrémité 2' est en première position A et la première extrémité 2 en position de rétraction R, le système d'occultation S est en position relevée et la baie se trouve dégagée au maximum possible.

Dans le cas présent, la première extrémité mobile 2 du système d'occultation S est liée à une première barre de charge 3 qui s'étend entre des deux rails de guidage 40 et la deuxième extrémité mobile 2' du système d'occultation S est liée à une deuxième barre de charge 3' qui s'étend également entre les deux rails de guidage 40. L'installation d'occultation I comprend alors un système de câbles croisés 5, 5', 5" adaptés pour guider des deux barres de charge 3, 3' pendant leur déplacement.

Comme le montre la figure 16 il est mis en œuvre trois câbles 5,5',5", les points de fixation rigide étant respectivement P1, P1' pour le câble 5, P2,P2' pour le câble 5' et P3,P3' pour le câble 5". Le premier câble 5 s'étend entre les points P1 et P1' situés d'un même côté de la baie B en circulant dans les deux barres de charge 3 et 3'. Le deuxième câble 5' s'étend entre les points P2 et P2' situés à l'opposé l'un de l'autre en diagonale de la baie B en circulant dans les deux barres de charge 3 et 3'. Le troisième câble 5 s'étend entre les points P3 et P3' situés à l'opposé l'un de l'autre en diagonale de la baie B en circulant dans une seule des deux barres de charge, ici la deuxième barre de charge 3'. Une telle configuration des câbles croisés permet avantageusement de guider deux barres de charge avec trois câbles et non pas quatre comme cela est généralement le cas.

Afin d'assurer une manœuvre motorisée des deux barres de charge 3 et 3', l'installation I comprend, d'une part, un premier dispositif de manœuvre D, selon l'invention, dont la bande poussante 10 est liée à la première extrémité mobile 2 par la première barre de charge 3 et, d'autre part, un deuxième dispositif de manœuvre D', selon l'invention, dont la bande poussante 10' est liée à la deuxième extrémité mobile 2' par la deuxième barre de charge 3'.

Selon les exemples décrits précédemment, l'installation d'occultation comprend un seul système d'occultation ou rideau S. Toutefois, l'installation d'occultation I selon l'invention peut comprendre deux systèmes d'occultation S et S' comme le montre la figure 17.

Ainsi, l'installation I comprend un premier système d'occultation S dont une extrémité F est fixe tandis que son autre extrémité 2 est mobile en translation entre une position de rétraction R et une position d'extension E dans laquelle le premier système S occulte en partie au moins la baie. L'installation I comprend également un deuxième système d'occultation S' comprenant une extrémité fixe F' et une extrémité 2" mobile en translation entre une position de rétraction R' et la position d'extension E dans laquelle le deuxième système S' occulte en partie au moins la baie.

L'installation I comprend également un dispositif de manœuvre D selon l'invention dont la bande poussante 10 est liée aux extrémités mobiles 2 et 2' des deux systèmes d'occultation comme le montre la figure 18. Ainsi une rotation dans un sens de la roue d'entrainement et de renvoi 18 assure un rapprochement des extrémités mobiles 2 et 2' des deux systèmes d'occultation S et S' tandis qu'une rotation en sens inverse assure un éloignement des extrémités mobiles.

Selon l'exemple illustré figures 17 et 18, l'installation comprend pour chaque système d'occultation S et S', une barre de charge 3, 3' qui est solidaire de l'extrémité mobile correspondante 2, 2". Dans le cas présent, les barres de charge 3 et 3' sont liées à la bande poussante 10 au niveau des deux extrémités opposées de cette dernière.

Les figures 19 et 20 montrent un exemple de réalisation d'une installation d'occultation d'une baie B de forme trapézoïdale. Selon cet exemple, le système d'occultation ou rideau S comprend une extrémité fixe qui est liée au côté incliné de la baie B. L'extrémité mobile 2 opposé du système d'occultation S est liée à une barre de charge 3 qui est déplacée par un dispositif de manœuvre D conforme à l'invention. La barre de charge est alors mobile entre la position de rétraction R illustré figure 20 et la position d'extension E.

Selon cet exemple de réalisation, la barre de charge 3 est liée au chariot 12 solidaire de la bande poussante 10 par l'intermédiaire d'une liaison pivot 60 d'axe perpendiculaire au plan de la bande poussante 10. Dans le cas présent, l'axe de la liaison pivot est sensiblement horizontal. De plus, l'axe 60 est situé à distance de l'extrémité de la barre de charge 3 comme le montre la figure 19. L'installation I comprend en outre une butée 61 qui définit la position de rétraction R et qui est située plus haut que la liaison pivot 60. Ainsi, lorsque la barre de charge 3 est amenée en position de rétraction R par la bande poussante 10 son extrémité 62 vient en appui contre la butée 61 ce qui induit une rotation de la barre de charge 3 pour la rendre parallèle au côté incliné de la baie.

Bien entendu, diverses autres variantes ou formes de réalisation peuvent être envisagées pour le dispositif de manœuvre et l'installation selon l'invention dans le cadre des revendications annexées.

## Revendications

1. Dispositif de manœuvre d'un système d'occultation (S) d'une baie (E) qui comprend au moins une extrémité mobile (2) en translation entre une position de rétraction (R) et une position d'extension (E) dans laquelle le système occulte en partie au moins la baie (E), le dispositif de manœuvre comprenant :
- une bande poussante (10) flexible qui comprend une première et une deuxième extrémité (11, 21), qui est destinée à être liée à l'extrémité mobile (2) du système d'occultation et qui est adaptée pour transmettre un effort de poussée à l'extrémité mobile du système d'occultation,
- des moyens d'entrainement (15) motorisés de la bande poussante (10) adaptés pour assurer le déplacement en translation de la bande poussante (10) entre une position proximale (Pp) correspondant à la position de rétraction (R) du système d'occultation et une position distale (Pd) correspondant à la position extension (E) du système d'occultation,
**caractérisé en ce qu'**il comprend deux voies ou glissières parallèles (28, 30), superposées ou en regard l'une de l'autre, dans lesquelles circulent les première et deuxième extrémités (11, 21) de la bande poussante (10) et **en ce que** les moyens d'entrainement (15) comprennent une roue d'entrainement et de renvoi (18) autour de laquelle la bande poussante (10) s'enroule partiellement de manière qu'une portion de la bande poussante (10) est située dans la première glissière et une autre portion est située dans la deuxième glissière.

2. Dispositif selon la revendication précédente, **caractérisé en ce que** la bande poussante (10) est perforée et **en ce que** la roue d'entrainement et de renvoi (18) est dentée de sorte que ses dents engrènent ou coopèrent avec les perforations de la bande poussante (10) de manière à exercer un effort de poussée sur cette dernière.

3. Dispositif selon l'une des revendications précédentes, **caractérisé en ce qu'**il comprend un profilé (40) qui porte et délimite en partie au moins les voies de guidage parallèles en regard l'une de l'autre.

4. Dispositif selon la revendication précédente, **caractérisé en ce que** le profilé (40) possède une forme générale en U avec deux branches (41) parallèles reliées par une âme (42), chaque branche délimitant une voie de guidage (28, 30) pour une extrémité de la bande poussante.

5. Dispositif selon la revendication précédente, **caractérisée en ce qu'**il comprend au moins un chariot (12) de liaison entre la bande poussante (10) et le système d'occultation (S) et **en ce que** le chariot est situé en partie au moins entre les deux branches parallèles du profilé et se déplace entre ces dernières.

6. Dispositif selon l'une des revendications précédentes **caractérisé en ce que** les fond des deux voies de guidage en regards l'une de l'autre sont situés à une distance inférieure ou égale au diamètre de la roue de guidage et de renvoi (18).

7. Dispositif selon l'une des revendications précédentes, **caractérisé en ce que** la bande poussante (10) entoure la roue d'entrainement et de renvoi (18) sur un secteur angulaire compris entre 170° et 340° et de préférence compris entre 180° et 340°.

8. Dispositif selon l'une des revendications précédentes, **caractérisé en ce qu'**il comprend un boitier (55) qui entoure la roue d'entrainement et de renvoi (18) et qui délimite une chambre d'entrainement (56) à l'intérieur de laquelle est située la roue d'entrainement (18) et dont la paroi périphérique (57) guide la bande poussante.

9. Dispositif selon la revendication précédente et l'une des revendications 4 à 6, **caractérisé en ce que** le profilé (40) est rectiligne et **en ce que** le boitier (55) délimite en sortie de la chambre d'entrainement (56) deux portions des voies de guidage (58) qui sont courbes et raccordées aux portions de voie de guidage délimitées par le profilé (40).

10. Installation d'occultation d'une baie comprenant :
- un système d'occultation (S) d'une baie qui comprend au moins une première extrémité mobile (2) en translation entre une position de rétraction (R) et une position d'extension (E) dans laquelle le système occulte en partie au moins la baie,
- et un premier dispositif de manœuvre (D) selon l'une des revendications 1 à 9 dont la bande poussante (10) est liée à la première extrémité mobile du système d'occultation.

11. Installation selon la revendication précédente, **caractérisée en ce qu'**elle comprend :
- au moins une première barre de charge (3) qui est solidaire de la première extrémité mobile (2) du système d'occultation, qui est liée à la bande poussante du premier dispositif de manœuvre et qui s'étend entre deux rails de guidage (4),
- et un système de câbles croisés (5) adaptés pour garantir la perpendicularité de la première barre de charge (3) par rapport aux rails de guidage (4).

12. Installation selon la revendication précédente, **caractérisé en ce que** le système d'occultation comprend une deuxième extrémité mobile en translation entre une première position et une deuxième position et **en ce qu'**il comprend un deuxième dispositif de manœuvre selon l'une des revendications 1 à 9 dont la bande poussante (10) est liée à la deuxième extrémité mobile du système d'occultation.

13. Installation selon la revendication précédente, **caractérisée en ce qu'**elle comprend :
- au moins une deuxième barre de charge (3) qui est solidaire de la deuxième extrémité mobile (2) du système d'occultation, qui est liée à la bande poussante du deuxième dispositif de manœuvre et qui s'étend entre deux rails de guidage (4),
- et un système de câbles croisés (5) adaptés pour garantir la perpendicularité de la deuxième barre de charge (3) par rapport aux rails de guidage (4).

14. Installation selon la revendication 12, **caractérisé en ce qu'**elle comprend un deuxième système d'occultation (S) qui comprend une extrémité mobile en translation entre une position de rétraction (R) et une position d'extension (E) dans laquelle le deuxième système occulte en partie au moins la baie, l'extrémité mobile du deuxième système d'occultation étant liée à la bande poussante du premier dispositif de manœuvre de manière que une rotation dans un sens de la roue d'entrainement et de renvoi (18) assure un rapprochement des extrémités mobiles des deux systèmes d'occultation et qu'une rotation en sens inverse assure un éloignement des extrémités mobiles.

15. Installation selon la revendication précédente, **caractérisé en ce qu'**elle comprend
- pour chaque système d'occultation, une barre de charge qui est solidaire de l'extrémité mobile correspondante, qui est liée à la bande poussante du dispositif de manœuvre et qui s'étend entre deux rails de guidage (4),
- et un système de câbles croisés adaptés pour garantir la perpendicularité des barres de charge (3) par rapport aux rails de guidage (4).

## Patentansprüche

1. Vorrichtung zum Betrieb eines Systems (S) zum Abdecken einer Öffnung (E), das wenigstens ein bewegliches Ende (2) aufweist, das zwischen einer zurückgezogenen Stellung (R) und einer ausgezogenen Stellung (E), in der das System die Öffnung (E) wenigstens teilweise abdeckt, translatorisch bewegbar ist, wobei die Betriebsvorrichtung
- ein flexibles Schubband (10), das ein erstes und ein zweites Ende (11, 21) aufweist, das dazu bestimmt ist, mit dem beweglichen Ende (2) des Abdecksystems verbunden zu sein, und das dazu ausgelegt ist, eine Schubkraft auf das bewegliche Ende des Abdecksystems zu übertragen,
- motorisierte Antriebsmittel (15) für das Schubband (10), die dazu ausgelegt sind, eine translatorische Verlagerung des Schubbands (10) zwischen einer nahen Stellung (Pp), die der zurückgezogenen Stellung (R) des Abdecksystems entspricht, und einer entfernten Stellung (Pd), die der ausgezogenen Stellung (E) des Abdecksystems entspricht, sicherzustellen,
aufweist,
**dadurch gekennzeichnet, daß** sie zwei parallele, übereinander oder einander gegenüberliegende Wege oder Gleitschienen (28, 30) aufweist, in denen das erste und das zweite Ende (11, 21) des Schubbands (10) laufen,
und daß die Antriebsmittel (15) ein Antriebs- und Umlenkrad (18) aufweisen, um das sich das Schubband (10) so aufwickelt, daß sich ein Abschnitt des Schubbands (10) in der ersten Gleitschiene befindet und sich ein anderer Abschnitt in der zweiten Gleitschiene befindet.

2. Vorrichtung gemäß dem vorangehenden Anspruch, **dadurch gekennzeichnet, daß** das Schubband (10) gelocht ist und daß das Antriebs- und Umlenkrad (18) gezahnt ist, so daß dessen Zähne in die Lochungen des Schubbands (10) so eingreifen oder mit diesen zusammenwirken, daß sie auf letzteres eine Schubkraft ausüben.

3. Vorrichtung gemäß einem der vorangehenden Ansprüche, **dadurch gekennzeichnet, daß** sie ein Profilelement (40) aufweist, das die parallelen, einander gegenüber liegenden Führungswege wenigstens teilweise trägt und begrenzt.

4. Vorrichtung gemäß dem vorangehenden Anspruch, **dadurch gekennzeichnet, daß** das Profilelement (40) im Wesentlichen eine U-Form mit zwei parallelen, durch ein Mittelteil (42) verbundenen Armen (41) aufweist, wobei jeder Arm einen Führungsweg (28, 30) für ein Ende des Schubbands begrenzt.

5. Vorrichtung gemäß dem vorangehenden Anspruch, **dadurch gekennzeichnet, daß** sie wenigstens einen Wagen (12) als Verbindung zwischen dem Schubband (10) und dem Abdecksystem (S) aufweist und daß sich der Wagen wenigstens teilweise zwischen den beiden parallelen Armen des Profilelements befindet und sich zwischen letzteren bewegt.

6. Vorrichtung gemäß einem der vorangehenden Ansprüche, **dadurch gekennzeichnet, daß** die Böden der beiden sich einander gegenüber liegenden Führungswege in einem Abstand voneinander gelegen sind, der kleiner als oder gleich dem Durchmesser des Antriebs- und Umlenkrads (18) ist.

7. Vorrichtung gemäß einem der vorangehenden Ansprüche, **dadurch gekennzeichnet, daß** das Schubband (10) das Antriebs- und Umlenkrad (18) über einen Winkelbereich zwischen 170° und 340°, und vorzugsweise zwischen 180° und 340°, umgibt.

8. Vorrichtung gemäß einem der vorangehenden Ansprüche, **dadurch gekennzeichnet, daß** sie ein Gehäuse (55) aufweist, das das Antriebs- und Umlenkrad (18) umgibt und das eine Antriebskammer (56) umschließt, in der das Antriebs- und Umlenkrad (18) angeordnet ist und deren Umfangswandung (57) das Schubband führt.

9. Vorrichtung gemäß dem vorangehenden Anspruch und einem der Ansprüche 4 bis 6, **dadurch gekennzeichnet, daß** das Profilelement (40) geradlinig ist und daß das Gehäuse (55) am Ausgang der Antriebskammer (56) zwei Abschnitte der Führungswege (58) begrenzt, die gebogen sind und mit den durch das Profilelement (40) begrenzten Führungswegabschnitten verbunden sind.

10. Einheit zum Abdecken einer Öffnung mit
- einem System (S) zum Abdecken einer Öffnung, das wenigstens ein bewegliches Ende (2) aufweist, das zwischen einer zurückgezogenen Stellung (R) und einer ausgezogenen Stellung (E), in der das System die Öffnung (E) wenigstens teilweise abdeckt, translatorisch bewegbar ist,
- und einer ersten Betätigungsvorrichtung (D) gemäß einem der Ansprüche 1 bis 9, deren Schubband (10) mit dem ersten beweglichen Ende des Abdecksystems verbunden ist.

11. Einheit gemäß dem vorangehenden Anspruch, **dadurch gekennzeichnet, daß** sie
- wenigstens eine erste Laststange (3), die mit dem ersten beweglichen Ende (2) des Abdecksystems fest verbunden ist, die mit dem Schubband der ersten Betätigungsvorrichtung verbunden ist und die sich zwischen zwei Führungsschienen (4) erstreckt,
- und ein System aus gekreuzten Seilen (5), die dazu ausgelegt sind, die Rechtwinkligkeit der ersten Laststange (3) zu den Führungsschienen (4) sicherzustellen,
aufweist.

12. Einheit gemäß dem vorangehenden Anspruch, **dadurch gekennzeichnet, daß** das Abdecksystem ein zweites Ende aufweist, das zwischen einer ersten Stellung und einer zweiten Stellung translatorisch beweglich ist, und daß sie eine zweite Betätigungsvorrichtung gemäß einem der Ansprüche 1 bis 9 aufweist, deren Schubband (10) mit dem zweiten beweglichen Ende des Abdecksystems verbunden ist.

13. Einheit gemäß dem vorangehenden Anspruch, **dadurch gekennzeichnet, daß** sie
- wenigstens eine zweite Laststange (3), die mit dem zweiten beweglichen Ende (2) des Abdecksystems fest verbunden ist, die mit dem Schubband der zweiten Betätigungsvorrichtung verbunden ist und die sich zwischen zwei Führungsschienen (4) erstreckt,
- und ein System aus gekreuzten Seilen (5), die dazu ausgelegt sind, die Rechtwinkligkeit der zweiten Laststange (3) zu den Führungsschienen (4) sicherzustellen,
aufweist.

14. Einheit gemäß Anspruch 12, **dadurch gekennzeichnet, daß** sie ein zweites Abdecksystem (S) aufweist, das ein bewegliches Ende aufweist, das zwischen einer zurückgezogenen Stellung (R) und einer ausgezogenen Stellung (E), in der das zweite System die Öffnung wenigstens teilweise abdeckt, translatorisch bewegbar ist, wobei das bewegliche Ende des zweiten Abdecksystems mit dem Schubband der ersten Betätigungsvorrichtung verbunden ist, so daß eine Drehung des Antriebs- und Umlenkrads (18) in einer Richtung ein Annähern der beweglichen Enden der beiden Abdecksysteme sicherstellt und daß eine Drehung in der umgekehrten Richtung ein Entfernen der beweglichen Enden sicherstellt.

15. Einheit gemäß dem vorangehenden Anspruch, **dadurch gekennzeichnet, daß** sie
- für jedes Abdecksystem eine Laststange, die mit dem entsprechenden beweglichen Ende fest verbunden ist, die mit dem Schubband der Betätigungsvorrichtung verbunden ist und die sich zwischen zwei Führungsschienen (4) erstreckt,
- und ein System aus gekreuzten Seilen, die dazu ausgelegt sind, die Rechtwinkligkeit der Laststangen (3) gegenüber den Führungsschienen (4) sicherzustellen,
aufweist.

## Claims

1. A device for operating a system (S) for blinding a window (E), that comprises at least one end (2) mobile in translation between a retracted position (R) and an extended position (E) in which the system blinds at least in part the window (E), the operating device comprising:
- a flexible push belt (10) that comprises a first and a second (11, 21) ends, which is intended to be connected to the mobile end (2) of the blind system and which is adapted to transmit a pushing force to the mobile end of the blind system,
- motorized means (15) for driving the push belt (10), adapted to translationally move the push belt (10) between a proximal position (Pp) corresponding to the retracted position (R) of the blind system and a distal position (Pd) corresponding to the extended position (E) of the blind system,
**characterized in that** it comprises two parallel tracks or slides (28, 30), superimposed to each other or facing each other, in which the first and second ends (11, 21) of the push belt (10) circulate, and **in that** the drive means (15) comprise a drive and steering wheel (18) around which the push belt (10) is partially wound so that a portion of the push belt (10) is located in the first slide and another portion is located in the second slide.

2. The device according to the preceding claim, **characterized in that** the push belt (10) is perforated and **in that** the drive and steering wheel (18) is provided with teeth, so that the teeth thereof mesh or cooperate with the perforations of the push belt (10) so as to exert a pushing force to the latter.

3. The device according to one of the preceding claims, **characterized in that** it comprises a profile (40) that carries and delimits at least in part the parallel guiding tracks facing each other.

4. The device according to the preceding claim, **characterized in that** the profile (40) has a generally U-shape with two parallel legs (41) connected by a web (42), each leg delimiting a guiding track (28, 30) for one end of the push belt.

5. The device according to the preceding claim, **characterized in that** it comprises at least one connection carriage (12) between the push belt (10) and the blind system (S) and **in that** the carriage is located at least in part between the two parallel legs of the profile and moves between these latter.

6. The device according to one of the preceding claims, **characterized in that** the bottoms of the two guiding tracks facing each other are located at a distance lower than or equal to the diameter of the guiding and steering wheel (18).

7. The device according to one of the preceding claims, **characterized in that** the push belt (10) surrounds the drive and steering wheel (18) over an angular sector comprised between 170° and 340° and preferably comprised between 180° and 340°.

8. The device according to one of the preceding claims, **characterized in that** it comprises a casing (55) that surrounds the drive and steering wheel (18) and that delimits a drive chamber (56) inside which is located the drive wheel (18) and whose peripheral wall (57) guides the push belt.

9. The device according to the preceding claim and one of claims 4 to 6, **characterized in that** the profile (40) is rectilinear and **in that** the casing (55) delimits at the exit of the drive chamber (56) two portions of the guiding tracks (58) that are curved and connected to the guiding track portions delimited by the profile (40).

10. A window blind arrangement, comprising:
- a window blinding system (S), that comprises at least one first end (2) mobile in translation between a retracted position (R) and an extended position (E) in which the system blinds at least in part the window,
- and a first operating device (D) according to one of claims 1 to 9, whose push belt (11) is connected to the first mobile end of the blind system.

11. An arrangement according to the preceding claim, **characterized in that** it comprises:
- at least one first load bar (3) that is integral with the first mobile end (2) of the blind system, which is connected to the push belt of the first operating device and which extends between two guiding rails (4),
- and a system (5) of crossed cables adapted to guarantee the perpendicularity of the first load bar (3) with respect to the guiding rails (4).

12. The arrangement according to the preceding claim, **characterized in that** the blind system comprises a second end mobile in translation between a first position and a second position, and **in that** it comprises a second operating device according to one of claims 1 to 9, whose push belt (10) is connected to the second mobile end of the blind system.

13. The arrangement according to the preceding claim, **characterized in that** it comprises:
- at least one second load bar (3) that is integral with the second mobile end (2) of the blind system, which is connected to the push belt of the second operating device and which extends between two guiding rails (4),
- and a system (5) of crossed cables adapted to guarantee the perpendicularity of the second load bar (3) with respect to the guiding rails (4).

14. An arrangement according to claim 12, **characterized in that** it comprises a second blind system (S) that comprises an end mobile in translation between a retracted position (R) and an extended position (E) in which the second system blinds at least in part the window, the mobile end of the second blind system being connected to the push belt of the first operating device so that a rotation in one direction of the drive and steering wheel (18) causes the mobile ends of the two blind systems to get closer to each other and a rotation in the reverse direction causes the mobile ends to get away from each other.

15. The arrangement according to the preceding claim, **characterized in that** it comprises:
- for each blind system, a load bar that is integral with the corresponding mobile end, which is connected to the push belt of the operating device and which extends between two guiding rails (4),
- and a system of crossed cables adapted to guarantee the perpendicularity of the load bars (3) with respect to the guiding rails (4).
